# EUROPÄISCHE PATENTSCHRIFT

(11) **EP 2 203 328 B1**
(45) Veröffentlichungstag und Bekanntmachung des Hinweises auf die Patenterteilung: **01.04.2015**
(21) Anmeldenummer: 08803920.1
(22) Anmeldetag: 10.09.2008
(51) Int. Cl.: B60N 2/46, B60N 3/00

(54) **FAHRZEUGSITZ MIT EINER FÜR DEN BENUTZUNGSFALL AUFBAUBAREN TISCHSTRUKTUR**
VEHICLE SEAT WITH A TABLE STRUCTURE WHICH CAN BE ASSEMBLED FOR USE
SIÈGE DE VÉHICULE ÉQUIPÉ D'UNE STRUCTURE DE TABLE POUVANT ÊTRE ASSEMBLÉE EN CAS D'UTILISATION

(30) Priorität: 25.09.2007 DE 102007045838
(43) Veröffentlichungstag der Anmeldung: 07.07.2010
(73) Patentinhaber: Siemens Aktiengesellschaft, 80333 München (DE)
(72) Erfinder: STAUB, Ralf, 47799 Krefeld (DE)
(86) Internationale Anmeldenummer: PCT/EP2008/061953
(87) Internationale Veröffentlichungsnummer: WO 2009/040247

(56) Entgegenhaltungen:
- EP-A- 1 160 125
- DE-A1- 10 044 414
- FR-A- 2 841 510

## Beschreibung

Die Erfindung bezieht sich auf einen Fahrzeugsitz mit einer für den Benutzungsfall aufbaubaren Tischstruktur, wobei er wenigstens einen ausziehbaren Tischträger aufweist und die Tischstruktur mit einer Tischplatte vorgesehen ist, die wenigstens an einer Seite eine schwenkbar gelagerte Tischstütze aufweist, wobei die wenigstens eine Tischstütze an der Tischplatte derart schwenkbar gelagert ist, dass im aufgebauten Zustand der Tischstruktur die Tischplatte in einer horizontalen Lage gehalten ist.

Ein solcher Fahrzeugsitz ist beispielsweise aus der EP-A-1160125 oder auch der DE-A-10044414 bekannt. Dabei sind jeweils die Tischstrukturen mit dem zugehörigen Fahrzeugsitz integral verbunden.

Üblicherweise steht Fahrgästen zumindest in einer gehobenen Fahrzeugklasse ein Klapptisch in einer Rückenlehne eines Vordersitzes zur Verfügung, der individuell bzw. für Catering-Dienste am Platz genutzt werden kann und somit eine Komfortsteigerung darstellt. Bei den meisten bekannten Fahrzeugsitzen kann bei einer reinen Reihenbestuhlung für die Fahrgäste der vordersten Sitzreihe ein in Funktionalität und Komfort vergleichbarer Servicetisch nicht vorgesehen werden, zumeist bedingt durch die Sitzkonstruktion und fehlende Anordnungsmöglichkeiten in der Umgebung. Selbst wenn der entsprechende Bauraum im Einzelfall zur Verfügung stehen würde, wären umfangreiche und kostenintensive bauliche Maßnahmen erforderlich, von denen die gesamte Sitzkonstruktion und ggf. angrenzende Komponenten wie beim Schienenfahrzeug zum Beispiel der Wagenkastenrohbau und eine Seitenwandverkleidung, betroffen wären.

Eine bekannte Lösung besteht darin, eine Vis-a-vis-Bestuhlung mit einem ortsfest zwischen einer ersten und einer zweiten Sitzreihe installierten Tisch vorzusehen. Dies bedingt einen größeren baulichen Aufwand und birgt den Nachteil in sich, dass auf eine Drehbarkeit der Sitze verzichtet werden muss, wenn für jeden Sitz ein Tischplatz zur Verfügung stehen soll.

Bekannt sind außerdem Ausführungsformen von Fahrzeugsitzen, bei denen ein kombinierter Schwenkklapptisch seitlich am Sitz befestigt ist. Bei Nichtgebrauch wird dieser Tisch in einem Schacht verstaut, dessen oberer Abschluss durch die Armlehnenauflage erfolgt. Dieser Schacht stellt eine feste Seitenwange des Sitzes dar, die durch ihre Art und Weise der Konstruktion nicht beweglich ausgeführt werden kann. Eine solche Konstruktion ist zudem ausgeschlossen, wenn eine drehbare Armlehne gefordert ist, die, in eine senkrechte Position gebracht, ein bequemeres Verlassen des Sitzes ermöglicht.

Ausgehend hiervon liegt der Erfindung die Aufgabe zugrunde, einen Fahrzeugsitz der eingangs genannten Art derart weiterzuentwickeln, dass unabhängiger von einer jeweiligen Fahrzeugsitzumgebung ein Servicetisch bereitgestellt werden kann.

Diese Aufgabe wird dadurch gelöst, dass die Tischstruktur eine trennbare Einheit mit dem Fahrzeugsitz bildet, in dem die Tischstütze zur Abstützung der Tischplatte in den Tischträger eingesteckt wird und ein freies Ende der Tischstütze zur formschlüssigen Abstützung in einer zugeordneten Aufnahme des Tischträgers ausgebildet ist.

Da ein solcher Tischträger, der ausziehbar ist, an jeder Art von Fahrzeugsitzen vorgesehen werden kann, beispielsweise unterhalb einer jeweiligen Armlehne, lässt sich die Tischstruktur im Wesentlichen unabhängig von einer Anordnung des Fahrzeugsitzes innerhalb eines Fahrzeuges aufbauen. Die Lösung beinhaltet, dass die Tischstruktur eine trennbare Einheit mit dem Fahrzeugsitz bildet, denn die vorgesehene Tischstütze wird zur Abstützung der Tischplatte in den Tischträger, insbesondere in einen ausziehbaren Trägerarm, beispielsweise von oben eingesteckt.

Im einfachsten Fall reicht es aus, wenn lediglich eine Tischstütze vorgesehen ist. Durch entsprechende Lagerung der Tischstütze an der Tischplatte unter geeigneter Begrenzung eines sich ergebenden Schwenkwinkels wird hiermit bereits eine zuverlässige Abstützung am Tischträger und damit am Fahrzeugsitz herbeigeführt.

Es kann vorgesehen sein, dass die mindestens eine Tischstütze an ihrem freien Ende einen Lagerzapfen aufweist, der im aufgebauten Zustand der Tischstruktur in einen Lagerschlitz eines Tischträgerarms des Tischträgers eingreift. Dies bewirkt eine sichere Abstützung der Tischstütze an dem Tischträger.

Der Lagerzapfen kann an seinem vorderen und seinem hinteren Ende jeweils einen Absatz aufweisen, der in eine entsprechend abgesetzte Ausnehmung im Trägerarm eingreift. Auf diese Weise wird sichergestellt, dass eine Relativbewegung der Tischstütze in Längsrichtung des Tischträgers wirksam unterbunden wird. Relativbewegungen zwischen Tischstütze und Tischträger in Querrichtung können durch geeignete Anordnung von Begrenzungswänden des Trägerarms im Bereich des Lagerschlitzes vermieden werden.

Zur einfachen Handhabung des Trägerarms kann dieser mit einem endseitigen Griff versehen und in einer Führung gelagert sein.

Bevorzugt ist die mindestens eine Tischstütze derart schwenkbar an der Tischplatte gelagert, dass ein Maximalwinkel für die Schwenkbewegung zwischen der Tischplatte und der Tischstütze auf einen Winkel von 90° begrenzt ist. In diesem Fall ist nur eine Seite der Tischplatte als Nutzfläche verwendbar.

Bei einer erweiterten Ausführungsform kann die mindestens eine Tischstütze an der Tischplatte derart gelagert sein, dass ein Maximalwinkel für die Schwenkbewegung zwischen der Tischstütze und der Tischplatte auf +/- 90° begrenzt ist. In diesem Fall können beide Seiten der Tischplatte bei symmetrischer Ausführung als Nutzfläche vorgesehen werden.

Es ist bevorzugt, wenn eine weitere Tischstütze an der der mindestens einen Tischstütze gegenüberliegenden Seite der Tischplatte vorgesehen ist, die zur Auflage mit ihrem freien Ende auf einem zugehörigen zweiten Tischträger ausgebildet ist. Dieser zweite Tischträger ist bevorzugt ebenfalls ausziehbar. Auf diese Weise wird die Tischplatte auf ihren beiden Seiten abgestützt.

Auch die weitere Tischstütze kann an der Tischplatte schwenkbar gelagert sein.

Zur Vermeidung eines ungewollten Abhebens der Tischplatte von ihrer Abstützung im Bereich der weiteren Tischstütze ist es bevorzugt, wenn die weitere Tischstütze eine nach unten offene Lasche aufweist, die zum Umgreifen des weiteren Trägerarms vorgesehen ist.

Mit Hilfe dieser Lasche kann dann die weitere Tischstütze an dem zugehörigen Tischträger lösbar befestigt werden.

Ausführungsbeispiele der Erfindung werden nachfolgend unter Bezugnahme auf die Zeichnungen noch näher erläutert. Es zeigen:
- Figur 1: eine perspektivische, auseinandergezogene Ansicht eines Fahrzeugsitzes mit zugehöriger Tischstruktur,
- Figur 2: eine perspektivische Ansicht eines Verbindungsbereichs der Tischstruktur von Figur 1,
- Figur 3: eine perspektivische Ansicht eines vorderen Endbereiches eines Tischträgers der Tischstruktur von Figur 1,
- Figur 4: eine perspektivische Ansicht eines Verbindungsbereichs zwischen einer Tischstütze und einem Tischträger der Trägerstruktur von Figur 1,
- Figur 5: eine perspektivische Ansicht eines Fahrzeugsitzes mit fertig montierter Tischstruktur und
- Figur 6: eine perspektivische Teil-Seitenansicht der Tischstruktur von Figur.

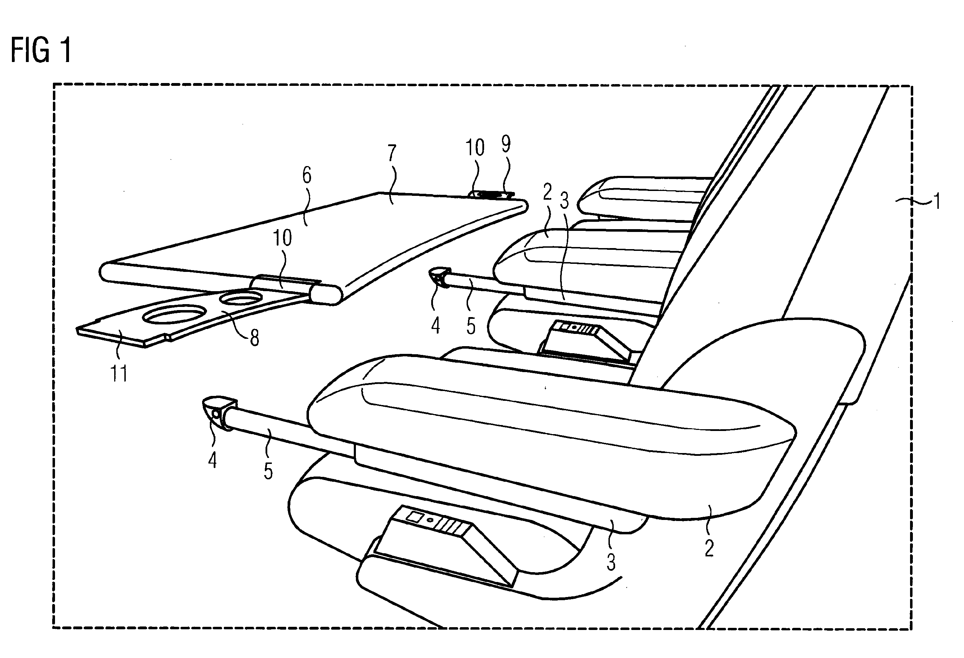

Figur 1 zeigt einen Fahrzeugsitz 1, der in üblicher Weise mit zwei Armlehnen 2 ausgestattet ist. Auf einer Unterseite jeder Armlehne 2 sind ausziehbare Tischträger 3 vorgesehen, die jeweils Trägerarme 5 aufweisen, die durch Betätigung eines endseitigen Griffs 4 aus einer Führung ausziehbar sind.

In der auseinandergezogenen Ansicht von Figur 1 ist oberhalb der Trägerarme 5 eine Tischstruktur 6 dargestellt, die eine Tischplatte 7 sowie an beiden Seiten der Tischplatte 7 schwenkbar angelenkte Tischstützen 8, 9 aufweist.

Gelenke 10 für die Lagerung der Tischstützen 8, 9 an der Tischplatte 7 lassen relative Winkelstellungen der Tischstützen 8, 9 zu der Tischplatte 7 innerhalb von Maximalwinkeln von +/- 90° zu, so dass die Tischstruktur 6 grundsätzlich so wie in Figur 1 dargestellt als auch spiegelverkehrt auf den Trägerarmen 5 abstützbar ist.

Die beiden Tischstützen 8, 9 sind im Wesentlichen baugleich, wobei jedoch die Tischstütze 8 einen Lagerzapfen 11 aufweist, der bei der Tischstütze 9 nicht vorhanden ist. Bei vertikaler Ausrichtung der Tischstützen 8, 9 erstreckt sich die Tischstütze 8 entsprechend der Länge des Lagerzapfens 11 weiter nach unten als die Tischstütze 9.

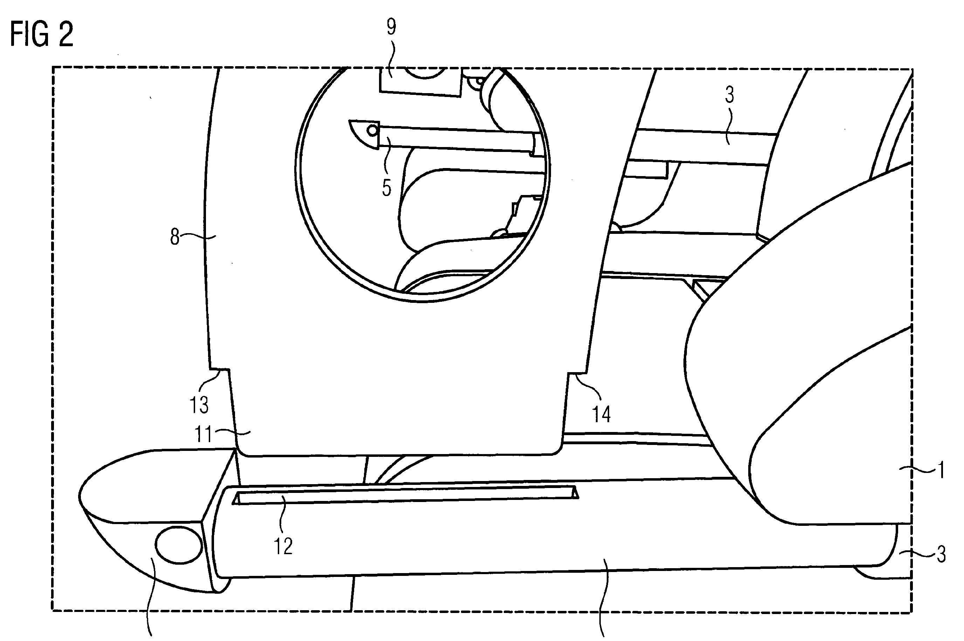

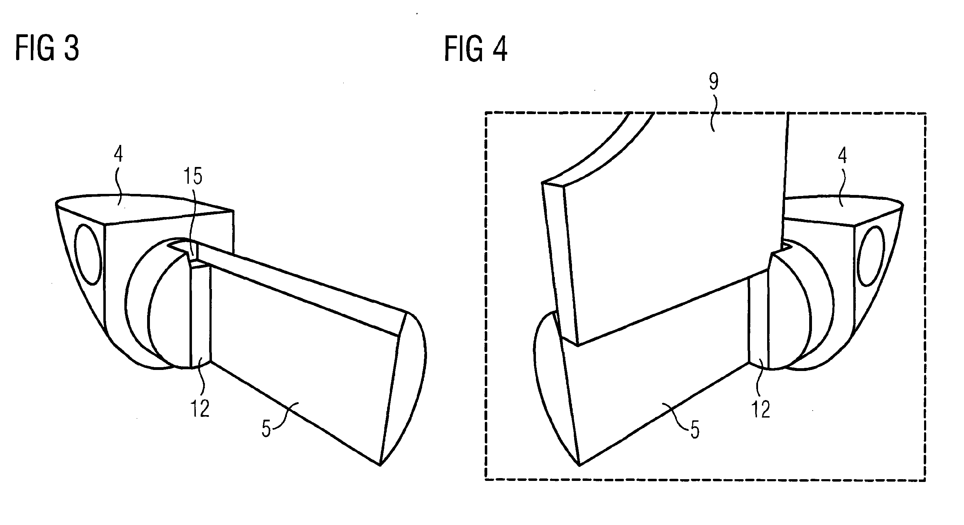

Dies geht auch aus Figur 2 hervor, die außerdem einen Eingriff des Lagerzapfens 11 in eine zugehörige schlitzförmige Ausnehmung 12 des Trägerarms 5 veranschaulicht. Eine Längsausdehnung der schlitzförmigen Ausnehmung 12 entspricht dabei im oberen Bereich des Trägerarms 5 derjenigen der Tischstütze 8 oberhalb des Lagerzapfens 11. Der Lagerzapfen 11 schließt sich an den Rest der Tischstütze 8 über Absätze 13, 14 an. Entsprechend, vergleiche Figur 3 für den vorderen Absatz 13, weist auch die Längsausdehnung der schlitzförmigen Ausnehmung 12 einen Absatz 15 auf, der mit dem Absatz 13 der Tischstütze 8 zusammenwirkt. In eingesetztem Zustand schließt der Lagerzapfen 11 etwa mit einer Unterkante der schlitzförmigen Ausnehmung 12 ab, so dass die zugehörige Tischstütze 8 in einer Längsrichtung des Trägerarmes 5 lagefixiert ist. Außerdem greift der Lagerzapfen 11 formschlüssig in die schlitzförmige Ausnehmung 12 ein, auch in Bezug auf eine relative Querbewegung, so dass sämtliche mögliche Relativbewegungen der Tischstütze 8 zu dem Trägerarm 5 wirksam vermieden werden.

Zum leichten Einführen des Lagerzapfens 11 in die spaltförmige Ausnehmung 12 sind deren Begrenzungswände als Positionierhilfe schräg angeordnet.

Aus Figur 4 geht die Abstützung der Tischstütze 9 auf dem Trägerarm 5 hervor. Da hier der Lagerzapfen fehlt, ruht die Tischstütze 9 auf dem Absatz 15 sowie auf einem weiteren, hinteren und hier nicht dargestellten Absatz.

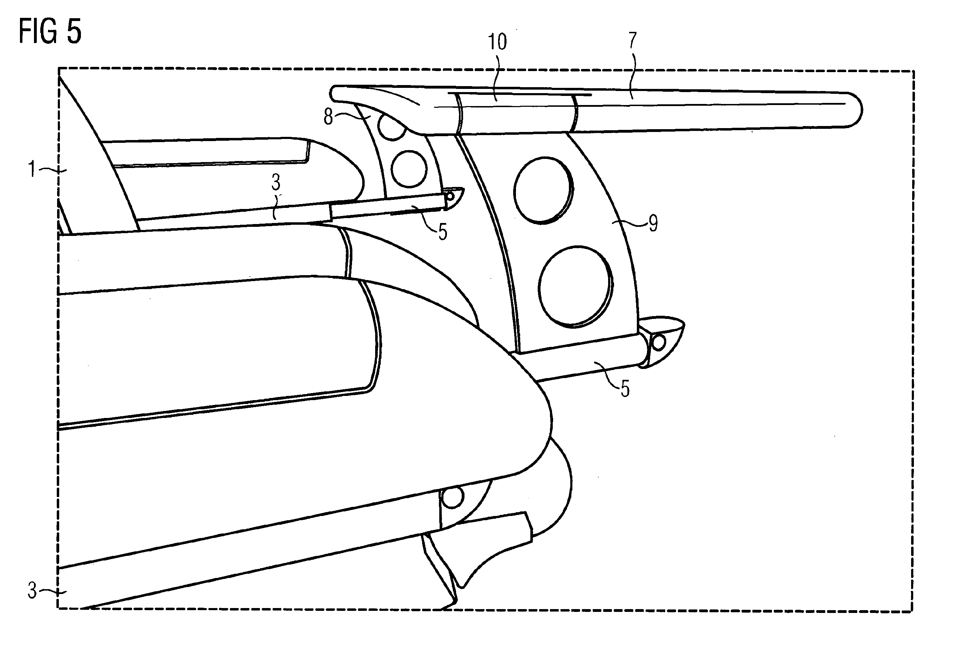

Die Ansicht von Figur 5 zeigt die fertig montierte Tischstruktur 6, bei der die in der Figur hinten dargestellte Tischstütze 8 mit dem Lagerzapfen 11 versehen ist, dessen unteres Ende in geringem Maße von dem zugehörigen Trägerarm 5 aus vorsteht.

Die einem Fahrgast zugewandte Tischkante der Tischplatte 7 ist durch eine leichte Ausrundung einer Körperform angepasst. Im montierten Zustand bleibt die Tischplatte 6 durch das Gelenk 10 über der formschlüssigen Lagerung des Lagerzapfens 11 drehbar, damit der Fahrzeugsitz 1 ungehindert verlassen werden kann, beispielsweise in einer Paniksituation.

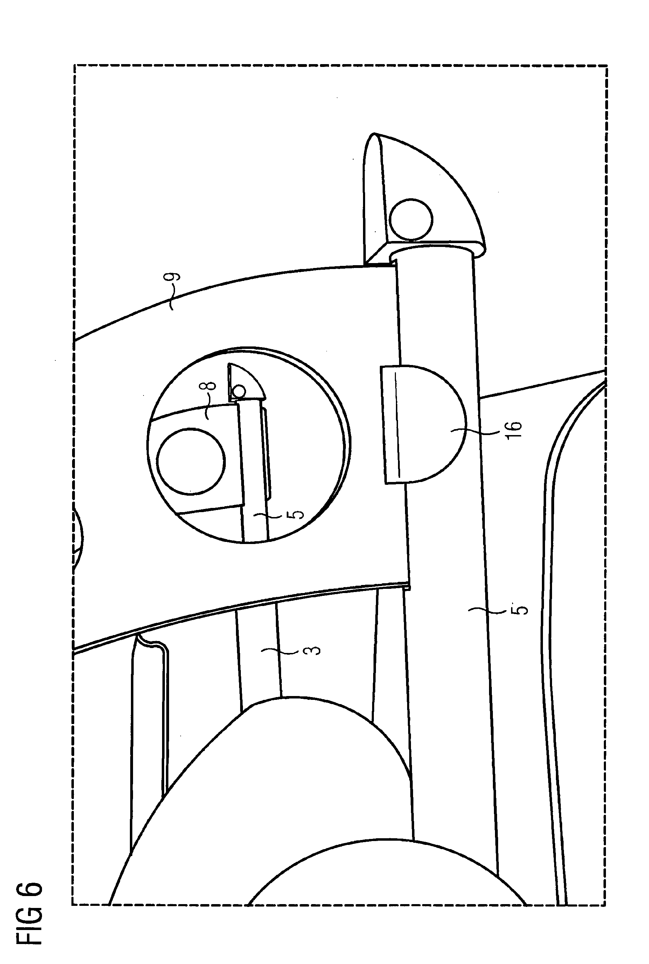

Wird eine verstärkte Sicherung gegen unbeabsichtigtes Anheben der Tischplatte 7 und dann möglichem Ausschwenken der zapfenlosen Tischstütze 9 gewünscht, kann dort eine zusätzliche, nach unten offene Lasche 16 vorgesehen werden (vgl. Fig. 6), die den Trägerarm 5 umgreift und somit ein unbeabsichtigtes Ausschwenken der Tischstütze 9 verhindert.

Es ist hervorzugeben, dass ggf. auf die Tischstütze 9 mit zugehörigem Gelenk 10 verzichtet werden kann, wobei in diesem Fall die Lagerung der Tischplatte 7 ausschließlich über die Tischstütze 8 mit zugehörigem Trägerarm 5 erfolgt. Selbstverständlich bietet die hier bevorzugt dargestellte Ausführungsform jedoch eine zuverlässigere Abstützung der Tischplatte 7.

## Patentansprüche

1. Fahrzeugsitz (1) mit einer für den Benutzungsfall aufbaubaren Tischstruktur (6),
wobei
er wenigstens einen ausziehbaren Tischträger (3) aufweist und die Tischstruktur mit einer Tischplatte (7) vorgesehen ist, die wenigstens an einer Seite eine schwenkbar gelagerte Tischstütze (8) aufweist, wobei die wenigstens eine Tischstütze (8) an der Tischplatte (7) derart schwenkbar gelagert ist, dass im aufgebauten Zustand der Tischstruktur, die Tischplatte (7) in einer horizontalen Lage gehalten ist,
**dadurch gekennzeichnet**,
dass die Tischstruktur eine trennbare Einheit mit dem Fahrzeugsitz (1) bildet, indem die Tischstütze (8) zur Abstützung der Tischplatte (7) in den Tischträger (3) einsteckbar ist und ein freies Ende der Tischstütze (8) zur formschlüssigen Abstützung in einer zugeordneten Aufnahme des Tischträgers (3) ausgebildet ist.

2. Fahrzeugsitz (1) nach Anspruch 1,
**dadurch gekennzeichnet**,
dass die mindestens eine Tischstütze (8) an ihrem freien Ende einen Lagerzapfen (11) aufweist, der im aufgebauten Zustand der Tischstruktur in einen Lagerschlitz (12) eines Trägerarms (5) des Tischträgers (3) eingreift.

3. Fahrzeugsitz (1) nach Anspruch 2,
**dadurch gekennzeichnet**,
dass der Lagerzapfen (11) an seinem vorderen und seinem hinteren Ende jeweils einen Absatz (13, 14) aufweist, der in eine entsprechend abgesetzte Ausnehmung (15) im Trägerarm (5) eingreift.

4. Fahrzeugsitz (1) nach einem der Ansprüche 1 bis 3,
**dadurch gekennzeichnet**,
dass der mindestens eine Tischträger (3) mit einem endseitigen Griff (4) versehen ist und in einer Führung gelagert ist.

5. Fahrzeugsitz (1) nach einem der Ansprüche 1 bis 4,
**dadurch gekennzeichnet**,
dass die mindestens eine Tischstütze (8) derart schwenkbar an der Tischplatte (7) gelagert ist, dass ein Maximalwinkel für die Schwenkbewegung zwischen der Tischplatte (7) und der Tischstütze (8) auf einen Winkel von 90° begrenzt ist.

6. Fahrzeugsitz (1) nach Anspruch 5,
**dadurch gekennzeichnet**,
dass die mindestens eine Trägerstütze (8) an der Tischplatte (7) derart gelagert ist, dass ein Maximalwinkel für die Schwenkbewegung zwischen der Tischstütze (8) und der Tischplatte (7) auf +/- 90° begrenzt ist.

7. Fahrzeugsitz (1) nach einem der Ansprüche 1 bis 6,
**dadurch gekennzeichnet**,
dass eine weitere Tischstütze (9) an der der mindestens einen Tischstütze (8) gegenüberliegenden Seite der Tischplatte (7) vorgesehen ist, der zur Auflage mit seinem freien Ende auf einem zugehörigen zweiten Tischträger (5) ausgebildet ist.

8. Fahrzeugsitz (1) nach Anspruch 7,
**dadurch gekennzeichnet, dass**
die weitere Tischstütze (9) an der Tischplatte (7) schwenkbar gelagert ist.

9. Fahrzeugsitz (1) nach einem der Ansprüche 7 oder 8,
**dadurch gekennzeichnet**,
dass die weitere Tischstütze (9) eine nach unten offene Lasche (16) aufweist, die zum Umgreifen des zweiten Trägerarms (5) vorgesehen ist.

## Claims

1. Vehicle seat (1) having a table structure (6) which can be set up when required for use, wherein the said vehicle seat has at least one extendable table carrier (3) and the table structure is provided with a table top (7) which has a pivotably mounted table support (8) at least on one side, wherein the at least one table support (8) is pivotably mounted on the table top (7) in such a way that, with the table structure in the set-up state, the table top (7) is held in a horizontal position, **characterized in that** the table structure forms a separable unit with the vehicle seat (1) **in that**, to support the table top (7), the table support (8) can be inserted into the table carrier (3) and a free end of the table support (8) is designed to be supported in a form-fitting manner in an associated receptacle of the table carrier (3).

2. Vehicle seat (1) according to Claim 1, **characterized in that** the at least one table support (8) has at its free end a bearing tenon (11) which, with the table structure in the set-up state, engages in a bearing slot (12) of a carrier arm (5) of the table carrier (3).

3. Vehicle seat (1) according to Claim 2, **characterized in that** the bearing tenon (11) has at its front and its rear end a respective shoulder (13, 14) which engages in a correspondingly stepped recess (15) in the carrier arm (5).

4. Vehicle seat (1) according to one of Claims 1 to 3, **characterized in that** the at least one table carrier (3) is provided with an end grip (4) and is mounted in a guide.

5. Vehicle seat (1) according to one of Claims 1 to 4, **characterized in that** the at least one table support (8) is pivotably mounted on the table top (7) in such a way that a maximum angle for the pivoting movement between the table top (7) and the table support (8) is limited to an angle of 90°.

6. Vehicle seat (1) according to Claim 5, **characterized in that** the at least one table support (8) is mounted on the table top (7) in such a way that a maximum angle for the pivoting movement between the table support (8) and the table top (7) is limited to +/- 90°.

7. Vehicle seat (1) according to one of Claims 1 to 6, **characterized in that** a further table support (9) is provided on the side of the table top (7) opposite to the at least one table support (8) and is designed to bear with its free end on an associated second table carrier (5).

8. Vehicle seat (1) according to Claim 7, **characterized in that** the further table support (9) is pivotably mounted on the table top (7).

9. Vehicle seat (1) according to either of Claims 7 and 8, **characterized in that** the further table support (9) has a downwardly open lug (16) which is provided for engaging around the second carrier arm (5).

## Revendications

1. Siège ( 1 ) de véhicule ayant une structure ( 6 ) de table pouvant être assemblée en cas d'utilisation,
dans lequel
il a au moins un support ( 3 ) de table qui peut être sorti et la structure de table est pourvue d'un plateau ( 7 ) de table, qui a au moins d'un côté un appui (8) de table monté pivotant, le au moins un appui (8) de table étant monté pivotant sur le plateau (7) de table, de manière à maintenir, lorsque la structure de table est à l'état monté, le plateau ( 7 ) de table dans une position horizontale,
caractérisé
en ce que la structure de table forme avec le siège ( 1 ) de véhicule une unité séparable, par le fait que l'appui ( 8 ) de table peut, pour appuyer le plateau ( 7 ) de table, être emmanché dans le support ( 3 ) de table et qu'une extrémité libre de l'appui ( 8 ) de table est constituée, pour l'appui par complémentarité de forme, dans un logement associé du support ( 3 ) de table.

2. Siège ( 1 ) de véhicule suivant la revendication 1,
caractérisé
en ce que le au moins un appui (8) de table a, à son extrémité libre, un tenon ( 11 ) de montage, qui, lorsque la structure de table est à l'état monté, pénètre dans une fente ( 12 ) de montage d'un bras ( 5 ) du support ( 3 ) de table.

3. Siège ( 1 ) de véhicule suivant la revendication 2,
caractérisé
en ce que le tenon ( 11 ) de montage a, à son extrémité avant et à son extrémité arrière, respectivement un ressaut ( 13, 14 ), qui pénètre dans un évidement ( 15 ) décalé de manière correspondante du bras ( 5 ) du support.

4. Siège ( 1 ) de véhicule suivant l'une des revendications 1 à 3,
caractérisé
en ce que le au moins un support ( 3 ) de table est pourvu, du côté de l'extrémité, d'une poignée ( 4 ) et est monté dans un guidage.

5. Siège ( 1 ) de véhicule suivant l'une des revendications 1 à 4,
caractérisé
en ce que le au moins un appui (8) de table est monté pivotant sur le plateau ( 7 ) de table, de manière à limiter à un angle de 90° un angle maximum du pivotement entre le plateau ( 7 ) de table et l'appui ( 8 ) de table.

6. Siège ( 1 ) de véhicule suivant la revendication 5,
caractérisé
en ce que le au moins un appui ( 8 ) du support est monté sur le plateau ( 7 ) de table, de manière à limiter à +/- 90° un angle maximum de pivotement entre l'appui ( 8 ) de table et le plateau ( 7 ) de table.

7. Siège ( 1 ) de véhicule suivant l'une des revendications 1 à 6,
caractérisé
en ce qu'il est prévu, du côté du plateau (7) de table opposé au au moins un appui ( 8 ) de table, un autre appui ( 9 ) de table, qui est constitué pour s'appliquer par son extrémité libre à un autre deuxième support (5) de table associé.

8. Siège ( 1 ) de véhicule suivant la revendication 7,
caractérisé
en ce que l'autre appui ( 9 ) de table est monté pivotant sur le plateau ( 7 ) de table.

9. Siège ( 1 ) de véhicule suivant l'une des revendications 7 ou 8,
caractérisé
en ce que l'autre appui ( 9 ) de table a un crampon ( 16 ) ouvert vers le bas, pour prendre le deuxième bras (5) du support.
